# EUROPÄISCHE PATENTSCHRIFT

(11) **EP 2 483 586 B1**
(45) Veröffentlichungstag und Bekanntmachung des Hinweises auf die Patenterteilung: **05.03.2014**
(21) Anmeldenummer: 10762869.5
(22) Anmeldetag: 24.09.2010
(51) Int. Cl.: F16L 3/233, F16L 55/163

(54) **DICHTUNGSINNENMANSCHETTE UND VERWENDUNG**
LINER AND USE
MANCHON D'ÉTANCHÉITÉ INTÉRIEUR ET UTILISATION

(30) Priorität: 30.09.2009 DE 102009047863
(43) Veröffentlichungstag der Anmeldung: 08.08.2012
(73) Patentinhaber: Uhrig Kanaltechnik GmbH, 78187 Geisingen (DE); Graf Feinmechanik GmbH, 78073 Oberbaldingen (DE)
(72) Erfinder: UHRIG, Thomas, 78187 Geisingen (DE); GRAF, Jürgen, 78073 Bad Dürrheim-Oberbaldingen (DE); MAUZ, Hubert, 78166 Donaueschingen (DE); BAUMANN, Albrecht, 79336 Herbolzheim (DE)
(74) Vertreter: Müller-Boré & Partner Patentanwälte PartG mbB
(86) Internationale Anmeldenummer: PCT/EP2010/005860
(87) Internationale Veröffentlichungsnummer: WO 2011/038868

(56) Entgegenhaltungen:
- WO-A1-98/55795
- US-A- 5 769 459
- US-B1- 6 276 757

## Beschreibung

Die Erfindung betrifft eine Dichtungsinnenmanschette zum Einbringen in Rohre.

Mit Hilfe von Dichtungsinnenmanschetten können bestehende Rohrleitungen saniert werden, insbesondere können Leckstellen von unterirdisch verlegten Abwasserrohren ohne Erdarbeiten repariert werden.

Es ist bekannt, Leckstellen von Rohren vom Rohrinnern her abzudichten. Hierzu dienen überlappend zusammengebogene, mit besonderen Dichtungselementen versehene Manschetten aus elastischem, korrosionsbeständigem Stahlblech, welche in das abzudichtende Rohr bis zur Leckstelle eingebracht werden. Dort werden sie mittels eines pneumatisch oder hydraulisch aufblasbaren Kissens bzw. Packers oder einer mechanischen Montiereinrichtung so lange aufgeweitet, bis sie sich unter Zusammenpressen der duroplastischen Dichtungselemente eng an die Rohrinnenwand angelegt haben. Eine Arretierungsvorrichtung hält die Dichtungsinnenmanschette in der aufgeweiteten Stellung.

Die Druckschrift WO 98/55795 A1 offenbart eine Dichtungsinnenmanschette gemäß dem Oberbegriff des Anspruchs 1.

Die Druckschrift US 5 769 459 A1 offenbart eine Arretierungsvorrichtung zum Arretieren einer Dichtungsinnenmanschette.

Die Druckschrift US 6 276 757 B1 offenbart eine weitere Arretierungsvorrichtung zum Arretieren zweier relativ zueinander verschiebbarer Elemente.

Die Aufgabe der Erfindung besteht in der Bereitstellung einer verbesserten Dichtungsinnenmanschette, welche einfach und kostengünstig herzustellen ist und ein verbessertes Arretierungsverhalten und eine verbesserte Abdichtungssicherheit aufweist.

Diese Aufgabe wird von einer Dichtungsinnenmanschette mit den Merkmalen des Anspruchs 1 und eine Verwendung mit den Merkmalen des Anspruchs 15 gelöst. Bevorzugte Ausführungsformen ergeben sich aus den Unteransprüchen.

### Dichtungsinnenmanschette gemäß einem Aspekt

Ein Aspekt der vorliegenden Erfindung betrifft eine Dichtungsinnenmanschette zum Einsetzen in Rohre aufweisend:
- ein Band, welches um eine Biegeachse Z entlang eines Umfangs mit einem Biegeradius R_{b} derart gebogen ist, daß ein innerer Bandteil und ein äußerer Bandteil einander überlappen,
   wobei das Band aufweitbar ist, so daß der innere Bandteil relativ zu dem äußeren Bandteil entlang einer Aufweitrichtung W verlagerbar ist,
- zumindest eine Arretierungsvorrichtung, welche verhindert, daß der innere Bandteil relativ zu dem äußeren Bandteil entgegen der Aufweitrichtung W verlagerbar ist,
wobei zwischen dem inneren Bandteil und dem äußeren Bandteil parallel zur Biegeachse Z ein Knickbereich in dem Band ausgebildet ist und
wobei das Band entlang dem Umfang in dem äußeren Bandteil einen maximalen Biegeradius R₁ aufweist, der kleiner ist als der maximale Biegeradius R₂ entlang dem Umfang in dem inneren Bandteil.

Die Dichtungsinnenmanschette ist in einsetzfähigem Zustand, d.h. im Auslieferungszustand, bzw. im eingesetzten Zustand, d.h. in der Betriebsposition, beispielsweise in ein Rohr eingesetzt, im wesentlichen rohr- bzw. zylinderförmig mit einer Rohr- bzw. Zylinderachse Z ausgebildet. Zur eindeutigen Beschreibung von Richtungen und geometrischen Relationen wird in der folgenden Beschreibung davon ausgegangen, daß die Längserstreckung der Dichtungsinnenmanschette im wesentlichen parallel zur Zylinderachse Z verläuft, welche die z-Achse eines Zylinderkoordinatensystems definiert. Zusammen mit dem sich senkrecht zur Zylinderachse Z bzw. z-Achse erstreckenden Radiusvektor R und dem senkrecht zur z-Achse und senkrecht zum Radiusvektor R stehenden Umfangsvektor U ist ein Zylinderkoordinatensystem aufgespannt.

Zur Ausbildung der Dichtungsinnenmanschette wird ein elastisch rückstellfähiges, vorzugsweise plastisch verformbares, Band, insbesondere ein Stahlband aus Edelstahl, um eine lokale Biegeachse mit einem bestimmten Biegeradius R_{b} gebogen bzw. gerollt, wobei der Biegeradius R_{b} entlang des Umfangs U variabel ist. Dabei gliedert sich das Band in ein äußeres Bandende, ein inneres Bandende und einen zwischen diesen beiden liegenden Knickbereich. Der Teil des Bandes zwischen dem inneren Bandende und dem Knickbereich wird als innerer Bandteil bezeichnet werden. Dementsprechend wird der Teil des Bandes zwischen dem äußeren Bandende und dem Knickbereich als äußerer Bandteil bezeichnet. Der innere Bandteil unterscheidet sich von dem äußeren Bandteil dadurch, daß der maximale Biegeradius des inneren Bandteils R₂ größer ist als der maximale Biegeradius R₁ des äußeren Bandteils. Insbesondere ist der Biegeradius R_{b} im wesentlich im gesamten äußeren Bandteil größer ist als der Biegeradius R_{b} im inneren Bandteil. Demzufolge ist es auch möglich, daß sich der äußere Bandteil zumindest bereichsweise mit sich selbst überlappen kann, ohne daß dabei der innenliegende überlappte Bereich des äußeren Bandteils zu einem inneren Bandteil wird.

Die Begriffe "inneres" und "äußeres", wie sie in dieser Anmeldung verwendet werden, beschreiben die relative Lage bzw. Anordnung im Hinblick auf die Zylinderachse Z bzw. den Radiusvektor R im Auslieferungszustand. So ist der Bereich des inneren Bandteil, welches im wesentlichen vom äußeren Bandteil überlappt wird, näher zur Zylinderachse Z hin angeordnet. In anderen Worten beschreibt der Begriff "im Inneren" insbesondere das Innenvolumen der Dichtungsinnenmanschette, welches von der Außenfläche umschlossen wird. Hierbei ist es auch nicht notwendig, daß die Dichtungsinnenmanschette geschlossen ist. Beispielsweise kann die Dichtungsinnenmanschette an den im wesentlichen kreisförmigen Stirnflächen geöffnet sein. Trotzdem beschreibt der Begriff "im Inneren" das Innenvolumen, so als ob ein Deckel angeordnet wäre. In anderen Worten beschreibt der Begriff "im Inneren" das Innenvolumen einer idealerweise vollständig geschlossenen Dichtungsinnenmanschette.

Wird an dem Band keine Kraft bzw. mechanische Spannung angelegt, so weist das Band entlang des Umfangs einen lokalen geometrischen Krümmungsradius Rₖ auf, der mit dem lokalen Biegeradius R_{b} identisch ist. Dieser Zustand der Dichtungsinnenmanschette wird als "entspannt" bezeichnet.

Durch Anlegen einer äußeren Kraft bzw. mechanischen Spannung kann das Band bzw. die Dichtungsinnenmanschette elastisch deformiert werden, so daß das Band entlang des Umfangs einen lokalen geometrischen Krümmungsradius Rₖ aufweist, der von dem lokalen Biegeradius R_{b} verschieden ist. Dieser Zustand der Dichtungsinnenmanschette wird als "gespannt" bezeichnet. Daher wird im Sinne der Erfindung zwischen dem Biegeradius R_{b} und dem Krümmungsradius Rₖ unterschieden. Im allgemeinen sind beide Radien voneinander verschieden, da sich die Dichtungsinnenmanschette sowohl im Zustand der Auslieferung als auch in der Betriebsposition in einem gespannten Zustand befinden kann. In Bereichen in denen der Biegeradius R_{b} von dem Krümmungsradius Rₖ abweicht tritt eine mechanische bzw. elastische Spannung in dem Material der Dichtungsinnenmanschette auf. Die elastische Spannung bewirkt eine Rückstellung des Materials, wenn keine äußere Kraft mehr auf die Dichtungsinnenmanschette wirkt bzw. wenn das Material in einen entspannten Zustand übergehen kann. Insbesondere kann die elastische Spannung bewirken, daß der innere Bandteil gegen den äußeren Bandteil gepreßt wird. Beide Bandteile können sich dadurch gegenseitig in einem gespannten Zustand haltern.

Aufgrund der elastischen Rückstellkraft des Bandmaterials hat das Band der Dichtungsinnenmanschette die Tendenz, von dem gespannten Zustand in den entspannten Zustand zurückzukehren, daß heißt an jeder Stelle entlang des Umfang einen tatsächlichen geometrischen Krümmungsradius Rₖ anzunehmen, welcher dem durch das Biegen bzw. Rollen vorgegebenen lokalen Biegeradius R_{b} entspricht.

Die Bandenden der Dichtungsinnenmanschette überlappen sich in einsatzfähigem Zustand, wobei - relativ zur Biegeachse - ein innerer und ein äußerer Bandteil ausgebildet werden. Dabei fällt die Biegeachse nach Ausbildung der Dichtungsinnenmanschette im wesentlichen mit der Zylinderachse Z zusammen.

Wird in der folgenden Beschreibung in Zusammenhang mit einer Richtungsangabe der Begriff "im wesentlichen" verwendet, so bedeutet dies insbesondere, daß die anzugebende Richtung von der genannten Bezugsrichtung um weniger als etwa ±30 Grad, vorzugsweise um weniger als etwa ±20 Grad, weiter bevorzugt um weniger als etwa ±15 Grad, und besonders bevorzugt um weniger als ±10 Grad, insbesondere um weniger als ±5 Grad, abweicht. Die Begriffe "im wesentlichen" und "etwa" können insbesondere eine geringfügige Abweichung von einem Sollwert beschreiben, insbesondere eine Abweichung im Rahmen der Herstellungsgenauigkeit und/oder im Rahmen der notwendigen Genauigkeit, so daß ein Effekt beibehalten wird, wie er bei dem Sollwert vorhanden ist. Der Begriff "im wesentlichen" kann daher eine Abweichung von weniger als 10%, weniger als 5%, weniger als 2%, bevorzugt weniger als 1% von einem Sollwert bzw. Sollposition, usw. beinhalten. Der Begriff "im wesentlichen" umfaßt den Begriff "identisch", d.h. ohne Abweichung von einem Sollwert, einer Sollposition usw. sein.

Der Begriff "aufweitbar" ist im Sinne der vorliegenden Erfindung so zu verstehen, daß das im wesentlichen zylindrisch zusammengebogene Band im wesentlichen durch eine elastische Verformung aufgeweitet werden kann. Mit anderen Worten vergrößert sich beim Aufweiten des Band dessen Umfang, wodurch sich der Überlappungsbereich des inneren und des äußeren Bandteiles verkleinert. Dabei wird der äußere Bandteil relativ zum inneren Bandteil entlang der Aufweitrichtung W verlagert, insbesondere durch die elastisch Verformung des Bandes.

Das Aufweiten kann beispielsweise dadurch erreicht werden, daß ein Kissen oder Packer in das Innere der Dichtungsinnenmanschette eingeführt, dort pneumatisch oder hydraulisch aufgeblasen und folglich aufgeweitet wird. Die Arretierungsvorrichtung verhindert, daß sich die Dichtungsinnenmanschette wieder zusammenzieht nachdem die Betriebsposition erreicht und das Kissen bzw. der Packer entfernt wurde. Der Begriff "Betriebsposition", wie er im Sinne der vorliegenden Erfindung verwendet wird, beschreibt der Zustand der Dichtungsinnenmanschette bzw. die Position deren Bauteile, in einem verbauten und betriebsbereiten Zustand der Dichtungsinnenmanschette.

Bei dem oben beschriebenen Installationsverfahren kann sich die Dichtungsinnenmanschette im Auslieferungszustand im wesentlichen in einem entspannten Zustand befinden, so daß auf die Arretierungsvorrichtung während des Herstellungsprozesses, der Lagerung und des Transports im wesentlichen keine Kräfte einwirken. Aufgrund der Verformung des Bandes während des Aufweitens geht die Dichtungsinnenmanschette in der Betriebsposition in einen gespannten Zustand über, wobei die Arretierungsvorrichtung derart auslegt ist, daß die durch die elastische Rückstellkraft erzeugten Kraft bzw. mechanische Spannung aufgenommen wird. Vorzugsweise wird in der Betriebsposition durch die Dichtungsinnenmanschette ein Anpreßdruck von Innen auf die umgebende Rohrwandung ausgeübt, in welche die Dichtungsinnenmanschette eingesetzt ist. Weiter vorzugsweise ist die Arretierungsvorrichtung ausgelegt, zusätzlich zu der mechanischen Spannung der Dichtungsinnenmanschette auch die dem Anpreßdruck auf die Rohrwandung entgegenwirkende mechanische Sparinung aufzunehmen.

Vörteilhafterweise kann durch den Anpreßdruck, der durch die Dichtungsinnenmanschette ausgeübt wird, die Rohrwandung mechanisch stabilisiert werden, beispielsweise um eine marode Rohrleitung zu sanieren.

Die Dichtungsinnenmanschette kann sich im Auslieferungszustand auch in einem teilweise gespannten Zustand befinden, da der mit dem größeren Biegeradius R₂ gebogene bzw. gerollte innere Bandteil durch den äußeren Bandteit im wesentlichen elastisch deformiert bzw. gespannt sein kann, so daß der geometrische Krümmungsradius im inneren Bandteil im wesentlichen gleich dem Krümmungsradius des äußeren Bandteils ist. Auf die Arretierungsvorrichtung kann dann im Auslieferungszustand eine Kraft in Richtung des Radiusvektors wirken. Durch die wirkende elastische Spannung der teilweise gespannten Dichtungsinnenmanschette hat die Dichtungsinnenmanschette die Tendenz sich aufzuweiten. Diese unbeabsichtigte Aufweitung kann durch ein geeignetes Fixiermittel verhindert werden, beispielsweise durch eine zusätzliche Sperre innerhalb der Arretierungsvorrichtung oder ein Sicherungsband, das um die Dichtungsinnenmanschette gelegt ist.

In den oben beschriebenen Fällen entspricht der Radius der Dichtungsinnenmanschette vor dem Aufweiten, also im Auslieferungszustand, im wesentlichen dem Biegeradius R₁ des äußeren Bandteils. Insbesondere im Bereich des Umfangs, an welchem die Arretierungsvorrichtung angeordnet ist, entspricht der Biegeradius R_{b} dem tatsächlichen Krümmungsradius Rₖ, so daß keine Krafteinwirkung aufgrund einer elastischen Rückstellkraft des Bandmaterials auf die Arretierungsvorrichtung einwirkt. Mit dem Aufweiten der Dichtungsinnenmanschette vergrößert sich der Krümmungsradius Rₖ, so daß aufgrund des Bestrebens des Bandes, zu dem ursprünglichen Biegeradius R_{b} zurückzukehren, eine Kraft, nämlich die elastische Rückstellkraft, in Richtung entgegen des Radiusvektors R auf die Arretierungsvorrichtung wirkt. Dadurch wird zum einen die Gleitreibung während der Aufweitung erhöht und zum anderen wird die Arretierungsvorrichtung mit einer permanenten mechanischen Spannung beaufschlagt, solange sich die Dichtungsinnenmanschette in der Betriebsposition befindet.

Vorteilhafterweise ist der maximale Biegeradius R₂ im Bereich des inneren Bandteils jedoch größer als der Radius R₁ im äußeren Bandteil. Vorzugsweise entspricht der Biegeradius des inneren Bandteils im wesentlichen dem Radius der Dichtungsinnenmanschette in der Betriebsposition. Vorteilhafterweise wird dadurch das Aufweiten der Dichtungsinnenmanschette erleichtert. In der Betriebsposition wird die Arretierungsvorrichtung vorteilhafterweise dauerhaft entlastet und kann entsprechend schwächer ausgeführt werden; da der innere Bandteil in der Betriebsposition dann frei von einer mechanischen Spannung ist, da der Krümmungsradius im wesentlichen dem Biegeradius entspricht. Weiter vorteilhafterweise ist die erfindungsgemäße Dichtungsinnenmanschette besonders einfach ausgebildet, wodurch diese besonders einfach herzustellen ist, so daß der Ausschußanteil bei der Fertigung gesenkt werden kann.

### Bevorzugte Ausführungsformen der Dichtungsinnenmanschette

Vorzugsweise ist der Biegeradius R_{b} entlang dem Umfang U in dem äußeren Bandteil konstant. Vorteilhafterweise ist ein Band mit einem konstanten Biegeradius besonders einfach herzustellen. Besonders bevorzugt entspricht der Biegeradius R_{b} (dieser entspricht dann dem maximalen Biegeradius R₁) dem Radius der Dichtungsinnenmanschette im Auslieferungszustand, so daß das Band entlang dem Umfang U zwischen dem äußeren Bandende und dem Knickbereich, also der äußere Bandteil, im wesentlichen in einem entspanntem Zustand ausgeliefert werden kann, d.h. daß im wesentlichen keine elastische Rückstellkraft wirkt.

Vorzugsweise ist der Biegeradius R_{b} entlang des Umfangs U in dem inneren Bandteil konstant. Besonders bevorzugt entspricht der Biegeradius R_{b} (dieser entspricht dann dem maximalen Biegeradius R₂) dem Radius der Dichtungsinnenmanschette in der Betriebsposition, so daß das Band entlang dem Umfang U zwischen dem inneren Bandende und dem Knickbereich, also der innere Bandteil, in der Betriebsposition im wesentlichen entspannt ist, d.h. im wesentlichen nicht elastisch verformt ist.

Der Biegeradius R_{b} vergrößert sich entlang des Umfangs U in dem inneren Bandteil stetig. Vorteilhafterweise kann die Arretierungsvorrichtung während des Aufweitens kräftemäßig entlastet werden.

Vorzugsweise vergrößert sich der Biegeradius R_{b} entlang des Umfangs U in dem inneren Bandteil linear gemäß der Gleichung R_{b} = (U₀+ΔU)/2π. Dabei ist U₀ der Umfang der Dichtungsinnenmanschette im Auslieferungszustand und ΔU entspricht der Zunahme des Umfangs U durch das Aufweiten. Der Nullpunkt des Umfangs (U=0) ist durch das äußere Bandende festgelegt. Unter Vernachlässigung des Knickbereiches entspricht der Biegeradius R_{b} des inneren Bandteils auf der Höhe der äußeren Bandendes dem tatsächlich vorliegenden geometrischen Krümmungsradius Rₖ an dieser Stelle. Vorausgesetzt, daß die Arretierungsvorrichtung im Bereich des äußeren Bandendes angeordnet ist, wäre der innere Bandteil im Bereich der Arretierungsvorrichtung im wesentlichen frei von einer mechanischen Spannung aufgrund einer elastischen Verformung des Bandes an dieser Stelle. Vorteilhafterweise wären die Reibungsverluste und die mechanische Beanspruchung der Arretierungsvorrichtung in diesem Falle minimal. Falls die Arretierungsvorrichtung vom äußeren Bandende beabstandet angeordnet ist, so ist die Größe U₀ um diesen Abstand zu erhöhen.

Vorzugsweise weist das Band im Knickbereich einen Biegeradius R₃ auf, der kleiner als der Biegeradius R₁ des Bandes im äußeren Bandteil ist. Bevorzugt kann dadurch erreicht werden, daß der innere Bandteil und der äußere Bandteil, insbesondere im Auslieferungszustand, im wesentlichen voneinander beabstandet sind, wodurch vorteilhafterweise die Reibung zwischen diesen beiden während des Aufweitens der Dichtungsinnenmanschette verringert wird.

Bevorzugt kann ein Band mit einem inneren Bandteil, einem äußeren Bandteil und einem dazwischen liegenden Knickbereich mittels einer an sich bekannten Rollmaschine hergestellt werden, insbesondere mittels einer Vierwalzenrollmaschine. Die gewünschten konstanten bzw. variablen Biegeradien entlang des Umfanges des Bandes im inneren Bandteil, im äußeren Bandteil bzw. im Knickbereich sind damit herstellbar. Insbesondere mittels einer CNC-Rollmaschine sind Bänder mit variablen Biegeradien in einfacher Weise herstellbar. Nach dem Rollen des Bandes kann dieses durch elastische Verformung des Bandmaterials in den Auslieferungszustand gebracht werden, wodurch sich lokal entlang des Umfangs vom Biegeradius abweichende geometrische Krümmungsradien des Bandes ergeben können. In diesem Zustand kann das Band mittels der Arretierungsvorrichtung bzw. mittels eines Fixiermittels gehalten werden.

Vorzugsweise weist die zumindest eine Arretierungsvorrichtung eine Ausnehmung auf, welche zumindest bereichsweise in dem inneren Bandteil ausgebildet ist, wobei sich die Längsseiten der Ausnehmung entlang des Umfangs U erstrecken. Vorteilhafterweise ist durch die Ausnehmung das äußere Bandteil bereichsweise vom Inneren der Dichtungsinnenmanschette her zugänglich. Die Ausnehmung wird bevorzugt vor dem Biegen bzw. Rollen des Bandes in dem Band ausgebildet, beispielsweise durch Stanzen, Pressen, Fräsen, mittels Laserstrahl oder ähnlichem.

Vorzugsweise weist die Ausnehmung an den zwei gegenüberliegenden Längsseiten einen ersten Eingriffbereich und einen zweiten Eingriffbereich auf.

Vorzugsweise weist die zumindest eine Arretierungsvorrichtung eine Rastvorrichtung auf, die an dem äußeren Bandteil befestigt ist. Weiter vorzugsweise greift die Rastvorrichtung durch die Ausnehmung in Richtung des Inneren der Dichtungsinnenmanschette und die Aufweitung ist durch Längserstreckung der im inneren Bandteil ausgebildeten Ausnehmung entlang der Aufweitrichtung W begrenzt. Eine Aufweitung ist nur insoweit möglich, bis die Rastvorrichtung an einem Ende der Ausnehmung anschlägt.

Weiter vorzugsweise weist die Rastvorrichtung zumindest ein Deckelement auf, welches insbesondere zumindest bereichsweise im Inneren der Dichtungsinnenmanschette über die Längsseiten der Ausnehmung ragt. Der innere Bandteil ist dann zumindest bereichsweise zwischen dem äußeren Bandteil und dem Deckelement angeordnet, so daß im Bereich der Rastvorrichtung der äußere und der innere Bandteil im wesentlichen formschlüssig aneinander liegen.

Die Rastvorrichtung wird bevorzugt an dem äußeren Bandteil befestigt, wenn das Band gerollt ist und sich im Auslieferungszustand befindet. Weiter vorzugsweise ist die Rastvorrichtung ausgelegt, das Band in dem Auslieferungszustand zu halten und einem Zusammendrücken sowie insbesondere einer Aufweitung, beispielsweise durch eine wieder entfernbare Sperre, entgegenzuwirken.

Vorzugsweise weist die Rastvorrichtung ein erstes drehbar gelagertes Sperritzel, ein zweites drehbar gelagertes Sperritzel und zumindest ein Rastelement auf. Das Rastelement kann die Drehung eines Sperritzels in jeweils einer Drehrichtung hemmen.

Vorzugsweise ist das erste Sperritzel ausgelegt, um zumindest bereichsweise in den ersten Eingriffbereich einzugreifen, und das zweite Sperritzel ist ausgelegt, um zumindest bereichsweise in den zweiten Eingriffbereich einzugreifen.

Vorzugsweise ist das zumindest eine Rastelement ausgelegt, eine Drehung des ersten und zweiten Sperritzels in einer zugeordneten Drehrichtung des jeweiligen Sperritzels zu sperren, so daß die Rastvorrichtung nicht relativ zum inneren Bandteil entgegen der Aufweitrichtung W verlagerbar ist.

Vorteilhafterweise ist das Aufweiten der Dichtungsinnenmanschette dann gehemmt bzw. gesperrt, wenn das Rastelement die Drehung der Sperritzel hemmt.

Vorzugsweise weisen die Sperritzel eine größere Dicke auf als das innere Bandteil. Besonders bevorzugt liegt das Verhältnis der Dicke der Sperritzel zur Dicke des inneren Bandteiles, zwischen etwa 1 und etwa 5, weiter bevorzugt zwischen etwa 1,1 und etwa 2, besonders bevorzugt zwischen etwa 1,2 und etwa 1,5, wobei die Dicke des inneren Bandteiles vorzugsweise von etwa 0,1 mm bis etwa 2 mm, besonders bevorzugt von etwa 0,5 mm bis etwa 1,5 mm, insbesondere etwa 1 mm, reicht. Vorteilhafterweise gelangen die Sperritzel auch dann in Eingriff mit den Eingriffbereichen an den gegenüberliegenden Längsseiten der Ausnehmung, wenn das Band gebogen ist.

Vorzugsweise ist das Rastelement ein vorgespannt gelagertes Ritzel. Die Vorspannung des Rastelementes kann bevorzugt durch eine Feder erzeugt werden.

Vorzugsweise umfaßt die Dichtungsinnenmanschette zumindest eine Arretierungsvorrichtung, welche
- eine Ausnehmung, die zumindest bereichsweise in dem inneren Bandende ausgebildet ist und deren Längsseiten sich entlang des Umfangs erstrecken,
- eine Rasteinrichtung und
- einen in dem äußeren Bandende angeordneten Rasteinrichtungsbefestigungsbereich zur Befestigung der Rasteinrichtung
aufweist,
wobei das Band aufweitbar ist, so daß die Rasteinrichtung relativ zur Ausnehmung entlang einer Aufweitrichtung W verlagerbar ist,
wobei die Ausnehmung an den zwei gegenüberliegenden Längsseiten einen ersten Eingriffbereich und einen zweiten Eingriffbereich aufweist,
wobei die Rasteinrichtung ein erstes Sperrelement, ein zweites Sperrelement und zumindest ein Spannelement aufweist,
wobei das erste Sperrelement einen ersten komplementären Eingriffbereich aufweist, welcher ausgelegt ist, um in einer Ruheposition zumindest bereichsweise in den ersten Eingriffbereich einzugreifen, und das zweite Sperrelement einen zweiten komplementären Eingriffbereich aufweist, welcher ausgelegt ist, um in der Ruheposition zumindest bereichsweise in den zweiten Eingriffbereich einzugreifen,
wobei der erste komplementäre Eingriffbereich des ersten Sperrelements aus der Ruheposition entlang einer ersten Betätigungsrichtung B1 verlagerbar ist und der zweite komplementäre Eingriffbereich des zweiten Sperrelements aus der Ruheposition entlang einer zweiten Betätigungsrichtung 82 verlagerbar ist und
wobei das zumindest eine Spannelement ausgelegt ist
an den ersten komplementären Eingriffbereich eine Kraft entgegen der ersten Betätigungsrichtung B1 und an den zweiten komplementären Eingriffbereich eine Kraft entgegen der zweiten Betätigungsrichtung B2 anzulegen, um den ersten und zweiten komplementären Eingriffbereich in der Ruheposition zu halten,
so daß die Rasteinrichtung nicht relativ zur Ausnehmung entgegen der Aufweitrichtung W verlagerbar ist.

Der Begriff "Betätigungsrichtung" bzw. "Verlagerungsrichtung" im Sinne dieser Erfindung beschreibt eine Richtung, entlang welcher ein Element und/oder ein Bereich durch eine Krafteinwirkung betätigbar und/oder verlagerbar ist bzw. betätigt und/oder verlagert wird bzw. zumindest bereichsweise elastisch verformbar ist bzw. verformt wird, d.h. betätigbar ist bzw. betätigt wird.

Der Begriff "Ruheposition", wie er im Sinne der vorliegenden Erfindung verwendet wird, beschreibt beispielsweise den Zustand bzw. die Position eines oder mehrerer Bauteile, insbesondere der Rasteinrichtung. In der "Ruheposition" befinden sich der erste und zweite komplementäre Eingriffbereich des ersten und zweiten Sperrelementes jeweils in Eingriff mit dem entsprechenden ersten oder zweiten Eingriffbereich der Ausnehmung im inneren Bandende. Das heißt, daß sich die jeweiligen Eingriffbereiche und komplementären Eingriffbereiche im wesentlichen im Formschluß befinden. Insbesondere ist das äußere Bandende relativ zum inneren Bandende aufgrund des Formschlusses nicht entgegen der Aufweitrichtung W verlagerbar. Das heißt, insbesondere eine Verringerung des Umfangs des Bandes der Dichtungsinnenmanschette ist in der Ruheposition nicht möglich. Der Begriff "Ruheposition,", wie er im Sinne der vorliegenden Erfindung verwendet wird, beschreibt insbesondere diejenige Position der Bauteile bevor die Dichtungsinnenmanschette in ein Rohr eingeführt wird.

Der Begriff "Betätigungsposition", wie er im Sinne der vorliegenden Erfindung verwendet wird, beschreibt beispielsweise einen von dem vorgenannten Zustand bzw. der vorgenannten Position verschiedenen Zustand bzw. Position der vorgenannten Bauteile, insbesondere der Sperrelemente. Im Gegensatz zu der Ruheposition wird in der Betätigungsposition eine externe Kraft auf einen oder mehrere Bestandteile der Dichtungsinnenmanschette ausgeübt, insbesondere infolge einer Aufweitung mittels einer Kraft auf das Band, wobei die Kraft von innen radial nach außen gerichtet ist. Wie oben beschrieben, erfolgt bei einer Aufweitung eine Verlagerung des äußeren Bandendes bzw. der Rasteinrichtung entlang der Aufweitrichtung W relativ zum inneren Bandende bzw. der darin ausgebildeten Ausnehmung. Insbesondere durch eine sägezahnförmige Ausbildung der ersten und zweiten Eingriffbereiche an den sich in Aufweitrichtung W erstreckenden Längsseiten der Ausnehmung kann eine erste bzw. zweite Kraft entlang der ersten bzw. zweiten Betätigungsrichtung B1, B2 auf den ersten bzw. zweiten komplementäre Eingriffbereich des ersten bzw. zweiten Sperrelements ausgeübt werden, wenn das Band durch eine externe radial Kraft aufgeweitet wird. Vorzugsweise sind die ersten und zweiten Eingriffbereiche bereichsweise und periodisch in Aufweitrichtung W verjüngt ausgebildet. Dabei sind die erste und zweiten Betätigungsrichtung voneinander verschieden. Die erste und zweite Kraft bzw. die erste und zweite Betätigungsrichtung B1, B2 sind dabei insbesondere vom Rand der Ausnehmung im wesentlichen entlang oder entgegen der z-Achse gerichtet, d.h. insbesondere zum Innenbereich der Ausnehmung. Insbesondere werden bei dem Übergang von der Ruheposition in die Betätigungsposition der erste komplementäre Eingriffbereich des ersten Sperrelements aus der Ruheposition entlang der ersten Betätigungsrichtung B1 in die Betätigungsposition verlagert. Entsprechend wird der zweite komplementäre Eingriffbereich des zweiten Sperrelements entlang der zweiten Betätigungsrichtung B2 verlagert. Insbesondere wird in der Betätigungsposition ermöglicht, daß das innere und das äußere Bandende relativ zueinander verlagerbar sind, so daß das Band der Dichtungsinnenmanschette aufweitbar ist bzw. aufgeweitet wird.

Vorteilhafterweise ist die bevorzugte Arretierungsvorrichtung besonders einfach ausgebildet, wodurch diese besonders einfach herzustellen ist, der Ausschußanteil bei der Fertigung gesenkt werden kann und sich die Stückkosten pro Dichtungsinnenmanschette reduzieren.

Vorzugsweise verläuft die erste Betätigungsrichtung B1 im wesentlichen anti-parallel zur zweiten Betätigungsrichtung B2, d.h. im wesentlich zu dieser entgegengerichtet. Vorteilhafterweise ist die Rasteinrichtung besonders einfach herzustellen, wenn die erste und zweite Betätigungsrichtung B1, B2 zueinander antiparallel, insbesondere jeweils senkrecht zu der Längserstreckung der Ausnehmung, d.h. jeweils senkrecht zur Aufweitrichtung W verlaufen. Besonders vorteilhafterweise ist nur ein Spannelement, beispielsweise in Form einer Feder, notwendig, welches gleichzeitig eine Kraft entgegen der ersten Betätigungsrichtung B1 an dem ersten komplementären Eingriffbereich des ersten Sperrelementes und eine Kraft entgegen der zweiten Betätigungsrichtung B2 an dem zweiten komplementären Eingriffbereich des zweiten Sperrelementes anlegen kann.

Vorzugsweise weist die Rasteinrichtung zumindest ein Deckelement und ein Befestigungsmittel zur lösbaren Befestigung der Rasteinrichtung an dem Rasteinrichtungsbefestigungsbereich auf.

Besonders bevorzugt ist das Befestigungsmittel eine Schraubverbindung, insbesondere eine Kreuzschlitzschraube oder eine Innensechskantschraube. Vorteilhafterweise ist eine solche Schraubverbindung lösbar, so daß die Rasteinrichtung vom äußeren Ende des Bandes abmontiert werden kann. Insbesondere kann das aufgeweitete Band der Dichtungsinnenmanschette bei abrriöntierter Rasteinrichtung wieder zusammengebogen werden, d.h. der Umfang der Dichtungsinnenmanschette verkleinert werden. Besonders vorzugsweise ist das Band der Dichtungsinnenmanschette im aufgeweiteten Zustand zumindest teilweise elastisch bzw. rückstellfähig verformt, so daß das aufgeweitete Band nach Entfernung oder Entsperrung der Rasteinrichtung aufgrund der elastischen Rückstellkraft einen Zustand mit einem kleineren Umfang einnimmt. Vorteilhafterweise kann so eine bereits in ein Kanalrohr eingesetzte und aufgeweitete, betriebsbereite Dichtungsinnenmanschette wieder aus dem Kanalrohr entfernt werden. Insbesondere kann die benutzte entfernte Dichtungsinnenmanschette zumindest teilweise wiederverwendet werden.

Vorzugsweise sind das Deckelement und das Befestigungsmittel einstückig ausgebildet.

Vorzugsweise sind das erste Sperrelement und das zweite Sperrelement jeweils plattenförmig ausgebildet. Vorteilhafterweise können die Sperrelemente dann aus einem Stahl- oder Blechstreifen ausgestanzt oder ausgeschnitten werden, so daß die Sperrelemente einfach und kostengünstig herzustellen sind.

Vorzugsweise weisen die Sperrelemente eine größere Dicke auf als das innere Bandende. Besonders bevorzugt liegt das Verhältnis der Dicke der Sperrelemente zur Dicke des inneren Bandendes, zwischen etwa 1 und etwa 4, weiter bevorzugt zwischen etwa 1,1 und etwa 2, besonders bevorzugt zwischen etwa 1,2 und etwa 1,5, wobei die Dicke des inneren Bandendes vorzugsweise von etwa 0,1 mm bis etwa 2 mm, besonders bevorzugt von etwa 0,5 mm bis etwa 1,5 mm, insbesondere etwa 1 mm, reicht.

Vorzugsweise sind das erste Sperrelement und das zweite Sperrelement im wesentlichen identisch oder kongruent ausgebildet. Vorteilhafterweise ist dann nur ein Sperrelement herzustellen, wobei die Sperrelemente beim Einbau der Rasteinrichtung entsprechend gedreht werden.

Vorzugsweise sind die Sperrelemente um das Befestigungsmittel schwenkbar ausgebildet.

Vorzugsweise ist das Spannelement eine drahtförmige oder blattförmige Feder. Vorteilhafterweise ist ein solches Spannelement einfach und kostengünstig herzustellen, da ein entsprechender elastischer bzw. rückstellfähiger Draht oder ein entsprechendes Band aus Federstahl nur abgelängt und gebogen werden muß.

Vorzugsweise sind die Sperrelemente einteilig bzw. einstückig ausgebildet. Dieses Einzelteil umfaßt dann insbesondere zwei Hälften, welche die Sperrelemente ausbilden.

Vorzugsweise weisen die einteilig ausgebildeten Sperrelemente ein Festkörpergelenk auf, das heißt, das erste Sperrelement und das zweite Sperrelement sind über eine Dünnstelle verbunden, welches als Festkörpergelenk ausgelegt ist. Besonders bevorzugt ist das Festkörpergelenk elastisch bzw. rückstellfähig ausgebildet und funktioniert als Spannelement.

Vorzugsweise weisen die Sperrelemente jeweils einen Aktuierungsbereich auf, durch den die Sperrelemente mittels eines Werkzeuges von der Ruheposition in die Betätigungsposition überführt werden können. Ein Aktuierungsbereich kann insbesondere in Form einer Bohrung ausgebildet sein. Vorteilhafterweise kann nach Erreichen der Betätigungsposition das innere Bandende relativ zu dem äußeren Bandende verlagert werden, beispielsweise um eine Dichtungsinnenmanschette zusammenzubiegen. Insbesondere weist das Deckelement, welches die Sperrelemente zum Inneren der Dichtungsinnenmanschette hin abdeckt, entsprechende Werkzeugdurchtritte auf, damit das Werkzeug von Innen her in die Aktuierungsbereiche eingreifen kann. Die Werkzeugdurchtritte sind insbesondere derart ausgelegt, daß die Aktuierungsbereiche der Sperrelemente entsprechend verlagert werden können, so daß die Rasteinrichtung von der Ruheposition in die Betätigungsposition überführt werden kann.

Vorzugsweise weist die Dichtungsinnenmanschette zwei Arretierungsvorrichtungen auf. Insbesondere sind die zwei Arretierungsvorrichtungen an den Endbereichen der im wesentlichen rohrförmigen Dichtungsinnenmanschette angeordnet. Besonders bevorzugt sind die zwei Arretierungsvorrichtungen symmetrisch zum Mittelpunkt der Dichtungsinnenmanschette, d.h. im wesentlichen gleich weit entfernt von ihrem Mittelpunkt oder Schwerpunkt. Vorteilhafterweise werden so die Verwindungen zwischen dem inneren und dem äußeren Bandende minimiert, so daß die Dichtungsinnenmanschette gleichmäßig und im wesentlichen verwindungsfrei bzw. verkantungsfrei aufgeweitet werden kann.

Vorzugsweise weist die Dichtungsinnenmanschette zwei Arretierungsvorrichtungen auf. Insbesondere sind die zwei Arreiterungsvorrichtungen an den Endbereichen der im wesentlichen rohrförmigen Dichtungsinnenmanschette angeordnet. Besonders bevorzugt sind die zwei Arreiterungsvorrichtungen symmetrisch zum Mittelpunkt der Dichtungsinnenmanschette, d.h. im wesentlichen gleich weit entfernt von ihrem Mittelpunkt oder Schwerpunkt. Vorteilhafterweise werden so die Verwindungen zwischen dem inneren und dem äußeren Bandteil minimiert, so daß die Dichtungsinnenmanschette gleichmäßig und im wesentlichen verwindungsfrei bzw. verkantungsfrei aufgeweitet werden kann.

Vorzugsweise ist das Band auf der Außenseite mit einem Elastomer überzogen.

Ein Aspekt der vorliegenden Erfindung betrifft die Verwendung einer erfindungsgemäßen Dichtungsinnenmanschette zur Abdichtung von Rohren, wobei die Dichtungsinnenmanschette in einem Auslieferungszustand in das Rohrinnere eingeführt wird und an einer Montageposition durch Aufweiten in eine Betriebsposition überführt wird.

Die vorliegende Erfindung ist nicht auf die obigen, beispielhaft beschriebenen Ausführungsformen beschränkt. Vielmehr können einzelne Elemente und/oder Merkmale eines jeden beschriebenen Aspekts und/oder einer jeden beschriebenen Ausführungsform mit einzelnen Elementen und/oder Merkmalen der weiteren Aspekte und/oder weiteren Ausführungsformen in beliebiger Weise miteinander kombiniert werden und somit weitere Aspekte und/oder Ausführungsformen gebildet werden.

### Figurenbeschreibung

Nachfolgend werden bevorzugte Ausführungsformen der vorliegenden Erfindung anhand der beigefügten Zeichnungen beispielhaft erläutert. Es zeigen:
- Figur 1:: einen Querschnitt senkrecht zur z-Achse durch eine Dichtungsinnenmanschette umfassend ein gebogenes Band und eine Rastvorrichtung;
- Figur 2:: eine Aufsicht auf die Arretierungsvorrichtung aus Richtung des Inneren der Dichtungsinnenmanschette
- Figur 3:: einen Querschnitt senkrecht zur z-Achse durch eine Dichtungsinnenmanschette umfassend ein gebogenes Band und eine Rasteinrichtung;
- Figur 4:: eine detaillierten Querschnitt senkrecht zur z-Achse durch die Rasteinrichtung der Dichtungsinnenmanschette;
- Figur 5:: eine Draufsicht der Rasteinrichtung aus Richtung des Inneren der Dichtungsinnenmanschette;
- Figur 6:: eine detaillierte Draufsicht der Rasteinrichtung in Ruheposition;
- Figur 7:: eine detaillierte Draufsicht der Rasteinrichtung in Betätigungsposition; und
- Figur 8:: eine perspektivische Explosionsansicht der Arretierungsvorrichtung der Dichtungsinnenmanschette.

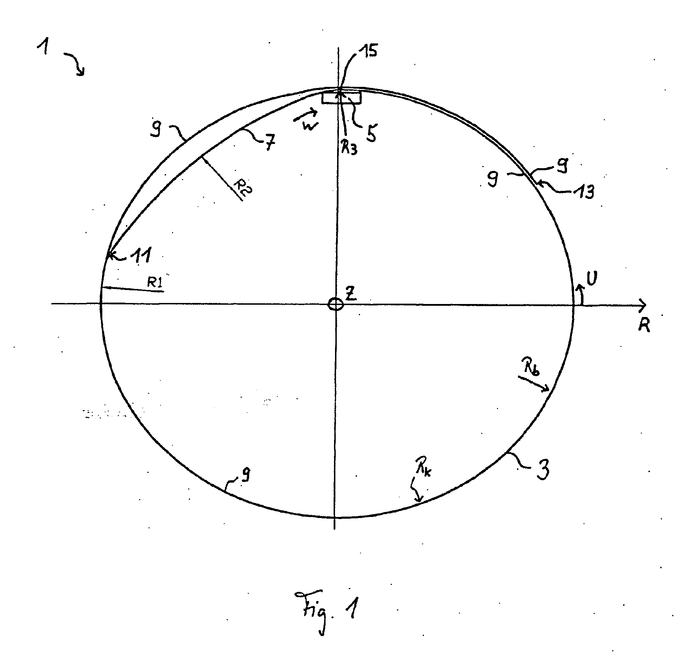

Figur 1 zeigt einen Querschnitt senkrecht zur z-Achse, welche durch die Rohr- bzw. Zylinderachse Z festgelegt ist, durch eine Dichtungsinnenmanschette 1 zum Einsetzen in Rohre, insbesondere zum Abdichten von Leckstellen und zum mechanischen Stabilisieren von bestehenden Kanalrohren. Zusammen mit dem sich senkrecht zur Zylinderachse Z bzw. z-Achse erstreckenden Radiusvektor R und dem senkrecht zur z-Achse und senkrecht zum Radiusvektor R stehenden Umfangsvektor U ist das in der Fig. 1 gezeigte Koordinatensystem definiert.

Die dargestellte Dichtungsinnenmanschette 1 ist aus einem federelastischen Material hergestellt, vorzugsweise aus einem Band 3 aus Blech oder nichtrostendem Stahl. Das Band 3 weist vorzugsweise eine Dicke von etwa 0,1 mm bis etwa 5 mm, besonders bevorzugt von etwa 0,5 mm bis etwa 2 mm, insbesondere etwa 1 mm, auf. Das Band 3 ist im wesentlichen rohr- bzw. zylinderförmig derart zusammengebogen, daß die Endbereiche des Bandes einander überlappen. Dadurch lassen sich ein innerer Bandteil 7 und ein äußerer Bandteil 9 unterscheiden, die sich in Umfangsrichtung U überlappen. Der innere Bandteil 7 wird durch ein inneres Bandende 11 und einen Knickbereich 15 begrenzt. Der äußere Bandteil 9 wird durch ein äußeres Bandende 13 und den Knickbereich 15 begrenzt. In dieser Ausführungsform ist eine Arretierungsvorrichtung derart von dem äußeren Bandende 13 beabstandet angeordnet, daß sich der äußere Bandteil 9 bereichsweise mit sich selbst überlappt, wobei der innen liegende Bereich des äußeren Bandteils 9 nicht vom inneren Bandteil 7 umfaßt wird bzw. nicht Bestandteil des inneren Bandteils 7 ist.

Die in der Fig. 1 gezeigte Dichtungsinnenmanschette 1 ist im Auslieferungszustand, d.h. in einem einsetzfähigem Zustand, um in eine Rohrleitung eingesetzt zu werden. Vorzugsweise ist der in Fig. 1 gezeigte Zustand ein im wesentlichen entspannter Zustand, d.h. in diesem Zustand ist an dem Band keine Kraft bzw. mechanische Spannung angelegt, so daß das Band entlang des Umfangs einen lokalen geometrischen Krümmungsradius Rk aufweist, der mit dem lokalen Biegeradius R_{b} identisch ist, der durch das Rollen des Bandes vorgegeben ist.

Die in der Fig. 1 gezeigt Ausführungsform der Dichtungsinnenmanschette weist demnach entlang des Umfangs U in dem äußeren Bandteil 9 einen im wesentlichen konstanten Biegeradius R₁ auf. Der Biegeradius R₂ entlang des Umfangs U im inneren Bandteil 7 ist ebenfalls im wesentlichen konstant. Jedoch ist der Biegeradius R₁ des äußeren Bandteils kleiner als der Biegeradius R₂ im inneren Bandteil 7. Weiter weist das Band 3 im Knickbereich 15 einen Biegeradius R₃ auf, der kleiner ist als der Biegeradius R₁ im äußeren Bandteil 9. In dieser bevorzugten Ausführungsform kann durch eine entsprechend dimensionierte Biegung im Knickbereich 15, entweder durch die Ausdehnung des Knickbereichs 15 entlang des Umfangs U oder durch einen hinreichend kleinen Biegeradius R₃, ein vollflächiges Anliegen des inneren Bandteils 7 an der Innenwand des äußeren Bandteils 9 vermieden werden. Vorteilhafterweise ist dadurch die mechanische Spannung, die aufgrund des Zwingens in die Form des äußeren Bandteils 9 auf den inneren Bandteil 7 wirkt, reduziert. Weiter vorteilhafterweise ist ebenfalls der Haft- und Gleitreibungswiderstand zwischen dem inneren Bandteil 7 und dem äußeren Bandteil 9 reduziert, um vorteilhafterweise den notwendigen Kraftaufwand für das Aufweiten der Dichtungsinnenmanschette 1 zu reduzieren.

Die in Fig. 1 gezeigte Ausführungsform der Dichtungsinnenmanschette 1 kann beispielsweise ausgelegt sein, in ein Kanalrohr der Größe DN 600 mit einem Radius von 300 mm eingebracht zu werden. Dazu kann die Dichtungsinnenmanschette 1 beispielsweise derart ausgebildet sein, daß der äußere Bandteil 9 des Bandes 3 einen konstanten Biegeradius R₁ von etwa 240 mm bis etwa 260 mm aufweist. Weiter beispielsweise kann der innere Bandteil 7 des Bandes 3 mit einem konstanten Biegeradius R₂ von etwa 300 mm bis etwa 320 mm ausgebildet sein und der Biegeradius R₃ im Knickbereich 15 kann etwa 50 mm bis etwa 100 mm betragen.

Die Dichtungsmanschette 1 kann an einer beliebigen Stelle eines Kanalrohres durch geeignete Vorrichtungen aufgeweitet werden, so daß sie an der Innenseite des Kanalrohres im wesentlichen formschlüssig anliegt. Insbesondere kann die Dichtungsinnenmanschette 1 zumindest bereichsweise mit einem (nicht dargestellten) Überzug bzw. Schlauch aus elastischem, beständigem, insbesondere wasserdichtem Material überzogen sein.

Diese Ausführungsform der Dichtungsinnenmanschette 1 weist eine Arretierungsvorrichtung 5 auf, um die Dichtungsinnenmanschette 1 nach dem Aufweiten dauerhaft im aufgeweiteten Zustand zu halten.

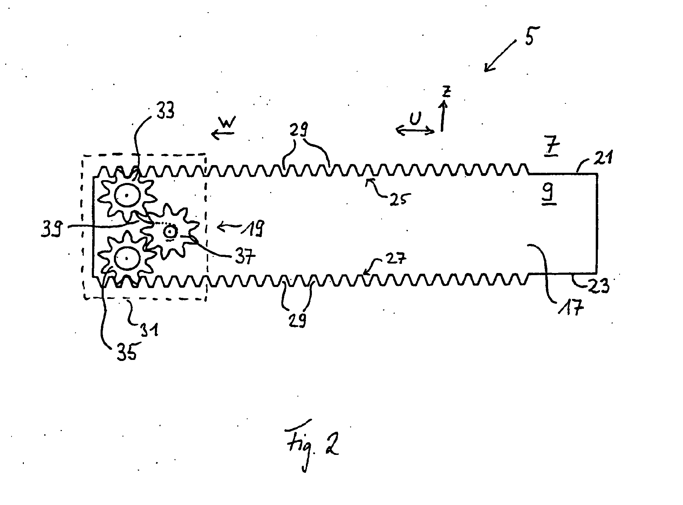

Die in Figur 2 dargestellte beispielhafte Ausführungsform der Arretierungsvorrichtung 5 umfaßt eine Ausnehmung 17 (in Fig. 1 nicht sichtbar), die in dem inneren Bandteil 7 ausgebildet ist und eine Rastvorrichtung 19, die an dem äußeren Bandteil 9 befestigt ist und die Ausnehmung 17 zumindest bereichsweise durchgreift.

Die Ausnehmung 17 erstreckt sich mit ihrer ersten Längsseite 21 und ihrer zweiten Längsseite 23 im wesentlichen entlang der Aufweitrichtung W bzw. entlang des Umfangs U. Zumindest bereichsweise sind an den zwei gegenüberliegenden Längsseiten 21, 23 der Ausnehmung 17 ein erster Eingriffbereich 25 und ein zweiter Eingriffbereich 27 ausgebildet. In dieser Ausführungsform sind die Eingriffbereiche 25, 27 als Reihe von Vorsprüngen 29 sägezahnförmig ausgebildet.

Die Rastvorrichtung 19 umfaßt ein Deckelement 31 (in Fig. 2 lediglich mit gestrichelten Linien angedeutet), so daß der innere Bandteil 7 zumindest bereichsweise zwischen dem äußeren Bandteil 9 und dem Deckelement 31 angeordnet ist. Durch das Deckelement 31 kann vorzugsweise eine Kraft entlang des Radiusvektors R auf den inneren Bandteil 7 aufgebracht werden, so daß im Bereich der Rastvorrichtung 19 der äußere und der innere Bandteil im wesentlichen formschlüssig aneinander liegen und insbesondere nur entlang der Aufweitrichtung W relativ zueinander verlagerbar sind. Die Rastvorrichtung 19 umfaßt weiter ein erstes Sperritzel 33 und ein zweites Sperritzel 35, die zwischen dem Deckelement 31 und dem äußeren Bandteil 9 innerhalb der Ausnehmung 15 angeordnet und jeweils drehbar gelagert sind.

Die Sperritzel 33, 35 sind auslegt, um mit den Eingriffbereichen 25, 27 in Eingriff zu sein. Um eine sichere Anordnung und Sperrwirkung zu erhalten, ist die Dicke der Sperritzel 33, 35, d.h. die räumliche Erstreckung entlang des Radiusvektors, vorzugsweise größer als die Dicke des inneren Bandteiles 7. Abhängig von den an den Sperritzeln 33, 35 auftretenden Krümmungsradien des inneren Bandteiles 7 und der Erstreckung des Deckelementes 31 entlang der Aufweitrichtung W liegt das bevorzugte Verhältnis von Dicke der Sperritzel 33, 35 zu Dicke des inneren Bandteiles 7, zwischen etwa 1 und etwa 5, weiter bevorzugt zwischen etwa 1,1 und etwa 2, besonders bevorzugt zwischen etwa 1,2 und etwa 1,5.

Die Rastvorrichtung 19 umfaßt weiter ein Rastritzel 37 als beispielhafte Ausführungsform eines Rastelements 37, wobei das Rastritzel 37 zwischen den Sperritzeln 33, 35 angeordnet ist und wobei das Rastritzel 37 mittels eines Federelements 39 in Aufweitrichtung W vorgespannt ist.

Dadurch wird bewirkt, daß jedes der drehbar gelagerten Sperritzel 33, 35 jeweils nur in eine Richtung drehbar ist, nämlich in die Richtung; in der das Rastritzel entgegen der Vorspannkraft des Federelements 39 entgegen der Aufweitrichtung W verlagert wird und damit beide Sperritzel 33, 35 voneinander entkoppelt werden. Das Rastritzel 37 sperrt hingegen die Drehung des jeweiligen Sperritzels 33, 35 in die entgegengesetzte Drehrichtung, da das Rastritzel 37 beide Sperritzel kräftemäßig miteinander koppelt, so daß sich die Sperritzel 33, 35 gegenseitig blockieren. Folglich ist die Rastvorrichtung 19 lediglich relativ zum inneren Bandteil 7 entlang der Aufweitrichtung W verlagerbar.

Vorzugsweise ist die Dichtungsinnenmanschette 1 rückbaubar. Dazu ist insbesondere die Rastvorrichtung 19 lösbar. Besonders bevorzugt befindet sich die Dichtungsinnenmanschette 1 in der Betriebsposition in einem gespannten Zustand, so daß das Band 3 aufgrund der eigenen elastischen Federkraft seinen Umfang verringern kann und in den entspannten Zustand übergeht, wenn die Rastvorrichtung 19 entfernt ist. Vorteilhafterweise sind das Band 3 und die Teile der Rastvorrichtung 19 wiederverwendbar.

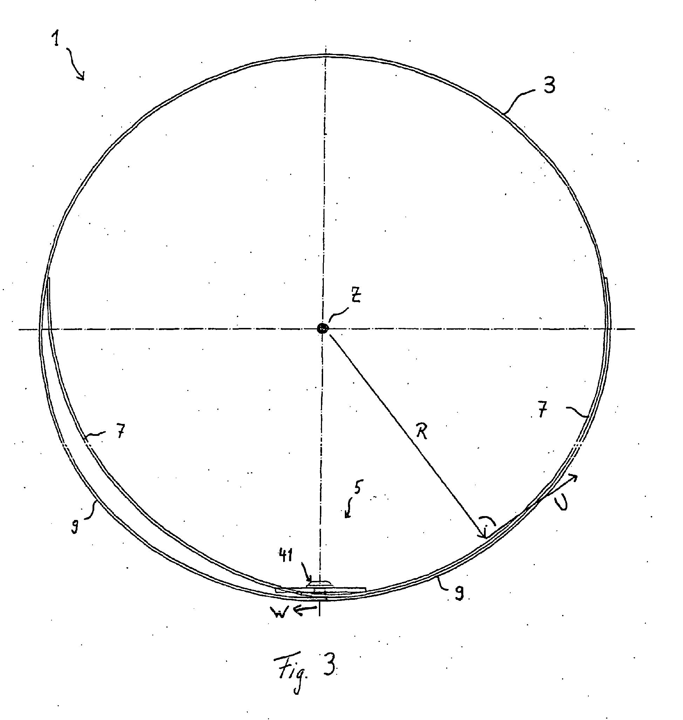

Figur 3 zeigt einen Querschnitt senkrecht zur z-Achse durch eine Dichtungsinnenmanschette 1 zum Einsetzen in Rohre, insbesondere zum Abdichten von Leckstellen und zum mechanischen Stabilisieren von bestehenden Kanalrohren. Die dargestellte Dichtungsinnenmanschette 1 ist aus einem federelastischen Material hergestellt, vorzugsweise aus einem Band 3 aus Blech oder nichtrostendem Stahl. Das Band 3 weist vorzugsweise eine Dicke von etwa 0,1 mm bis etwa 2 mm, besonders bevorzugt von etwa 0,5 mm bis etwa 1,5 mm, insbesondere etwa 1 mm, auf. Das Band 3 ist im wesentlichen rohr- bzw. zylinderförmig derart zusammen gebogen, daß dessen Bandenden 7, 9 einander überlappen. Dadurch lassen sich ein inneres Bandende 7 und ein äußeres Bandende 9 unterscheiden, die sich in Umfangsrichtung U überlappen.

Die Dichtungsmanschette 1 kann an einer beliebigen Stelle eines Kanalrohres durch geeignete Vorrichtungen aufgeweitet werden, so daß sie an der Innenseite des Kanalrohres im wesentlichen formschlüssig anliegt. Insbesondere kann die Dichtungsinnenmanschette 1 zumindest bereichsweise mit einem (nicht dargestellten) Überzug bzw. Schlauch aus elastischem, beständigem, insbesondere wasserdichtem Material überzogen sein.

Diese Ausführungsform der Dichtungsinnenmanschette 1 weist eine Arretierungsvorrichtung 5 auf, um die Dichtungsinnenmanschette 1 nach dem Aufweiten dauerhaft im aufgeweiteten Zustand zu halten.

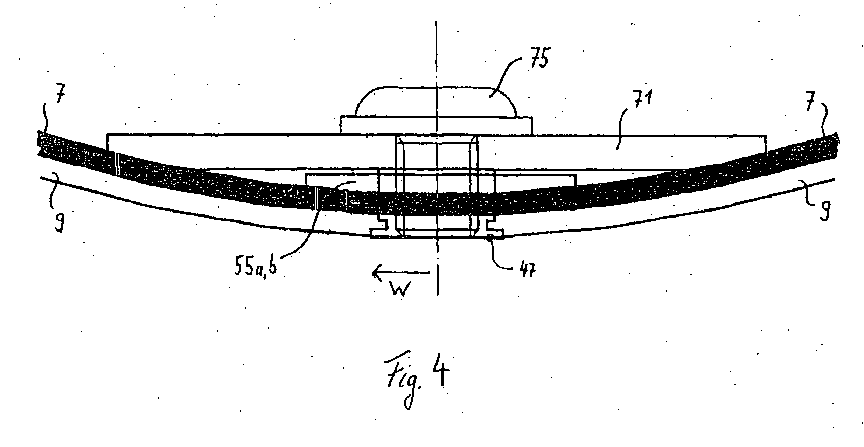

Die in Figur 4 detailliert dargestellte Arretierungsvorrichtung 5 umfaßt eine Ausnehmung 45 (in Fig. 4 nicht sichtbar), die in dem inneren Bandende 7 ausgebildet ist und eine Rasteinrichtung 41 (in Fig. 2 nicht sichtbar), die an dem äußeren Bandende 9 angeordnet ist und die Ausnehmung 45 zumindest bereichsweise durchgreift. Das äußere Bandende 9 weist einen Rasteinrichtungsbefestigungsbereich 47 auf, welche in dieser Ausführungsform als Einpreßmutter ausgebildet ist. Die Einpreßmutter kann bespielsweise ein Gewinde M2, M3, M4, M5, M6, M7 oder M8 aufweisen, um eine entsprechende Schraube, die als Befestigungsmittel 75 dient, aufzunehmen. Alternativ kann ein entsprechendes Gewinde unmittelbar in dem äußeren Bandende 9 ausgebildet sein. Das Befestigungsmittel 75 befestigt an dem äußeren Bandende 9 ein Deckelement 71, so daß das innere Bandende 7 zumindest bereichsweise zwischen dem äußeren Bandende 9 und dem Deckelement angeordnet ist. Durch das Deckelement 71 kann vorzugsweise eine Kraft entlang des Radiusvektors R auf das innere Bandende 7 aufgebracht werden, so daß im Bereich der Rasteinrichtung 41 das äußere und das innere Bandende im wesentlichen formschlüssig aneinander liegen und insbesondere nur entlang der Aufweitrichtung W relativ zueinander verlagerbar sind.

Zwischen dem Deckelement 71 und dem äußeren Bandende 9 innerhalb der Ausnehmung 45 (in Fig. 4 nicht sichtbar) sind das erste und zweite Sperrelement 55a, 55b sowie das Spannelement 63 (in Fig. 4 nicht gezeigt) angeordnet. Die Sperrelemente 55a, 55b sind vorzugsweise als plattenförmige Elemente ausgebildet. Um eine sichere Anordnung und Sperrwirkung zu erhalten, ist die Dicke der Sperrelemente 55a, 55b größer als die Dicke des inneren Bandendes 7. Abhängig vom Krümmungsradius des inneren Bandendes 7 und der Erstreckung des Deckelementes 71 entlang der Aufweitrichtung W liegt das bevorzugte Verhältnis von Dicke der Sperrelemente 55a, 55b zu Dicke des inneren Bandendes 7, zwischen etwa 1 und etwa 4, weiter bevorzugt zwischen etwa 1,1 und etwa 2, besonders bevorzugt zwischen etwa 1,2 und etwa 1,5.

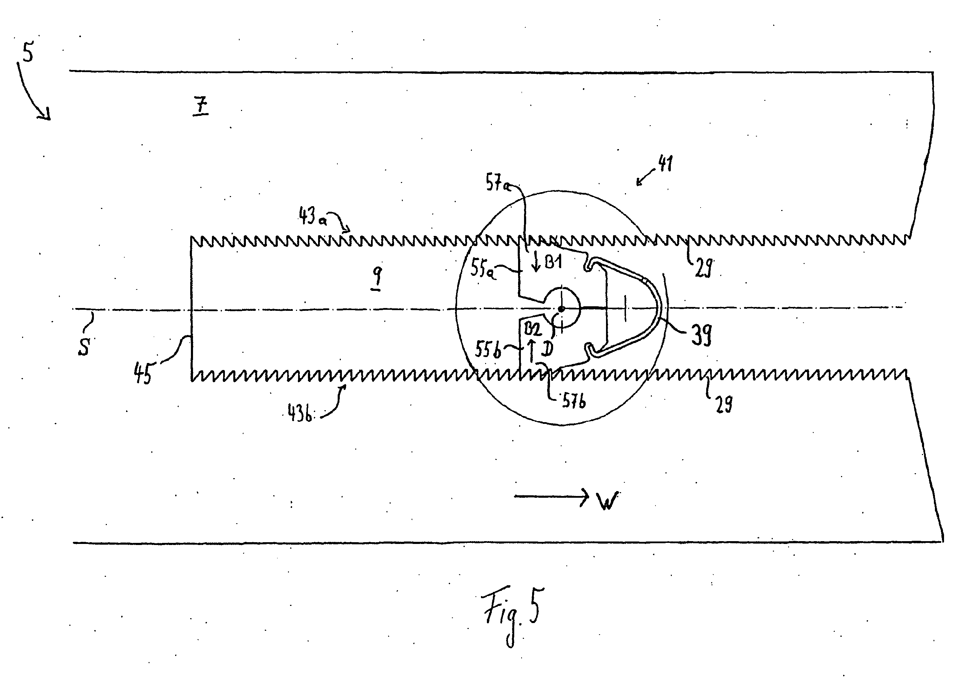

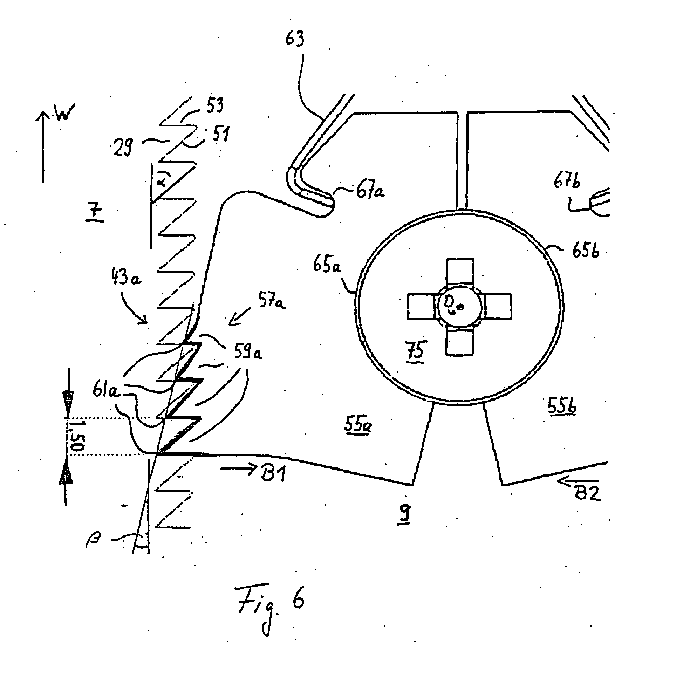

**Figur 5** **und** **Figur 6** zeigen eine Draufsicht der Arretierungsvorrichtung 5 in Ruheposition mit der Rasteinrichtung 41 aus Richtung des Inneren der Dichtungsinnenmanschette 1. Die Arretierungsvorrichtung 5 umfaßt eine Ausnehmung 45, die in dem inneren Bandende 7 ausgebildet ist und sich mit ihren Längsseiten im wesentlichen entlang der Aufweitrichtung W bzw. entlang des Umfangs erstreckt.

Zumindest bereichsweise sind an den zwei gegenüberliegenden Längsseiten der Ausnehmung 45 ein erster Eingriffbereich 43a und ein zweiter Eingriffbereich 43b ausgebildet In dieser Ausführungsform sind die Eingriffbereiche 43a, 43b als Reihe von Vorsprüngen 29 sägezahnförmig ausgebildet, vorzugsweise spiegelbildlich zur Symmetrieachse S, wobei der erste und zweite Eingriffbereich 43a, 43b periodisch in Aufweitrichtung W verjüngt ausgebildet sind. Dabei ist jeder einzelne Vorsprung 29 im wesentlichen als Dreieck ausgebildet, wobei ein erster Schenkel als Gleitbereich 51 dient, der vorzugsweise einen Winkel α von etwa 20 Grad bis etwa 60 Grad mit der Aufweitrichtung W einschließt. Besonders bevorzugt liegt der Winkel α zwischen etwa 30 Grad und etwa 50 Grad, insbesondere bei etwa 45 Grad. Ein zweiter Schenkel dient als Rastbereich 53, der sich im wesentlichen senkrecht zur Aufweitrichtung W erstreckt. Die Vorsprünge 29 sind vorzugsweise in einer räumlichen Periode von etwa 1 mm bis etwa 5 mm, besonders bevorzugt von etwa 1,5 mm bis etwa 4 mm, insbesondere etwa 2 mm, angeordnet.

Die Sperrelemente 55a, 55b sind vorzugsweise plattenförmig ausgebildet. Insbesondere sind die Sperrelemente 55a, 55b identisch ausgebildet und spiegelbildlich zum Symmetrieachse S angeordnet. Mit anderen Worten sind die Sperrelemente 55a, 55b kongruent zueinander ausgebildet. Die Sperrelemente 55a, 55b weisen jeweils komplementäre Eingriffbereiche 57a, 57b auf, welche ausgelegt sind, in die Eingriffbereiche 43a, 43b eingreifen zu können. Vorzugsweise sind die komplementäre Eingriffbereiche 57a, 57b als korrespondierende Vorsprünge 59a ausgebildet.

In dieser Ausführungsform sind die Sperrelemente 55a, 55b um die Achse D des Befestigungsmittels 55 schwenkbar ausgebildet. Durch das Schwenken um die Achse D ist der erste komplementäre Eingriffbereich 57a des ersten Sperrelements 55a aus der Ruheposition entlang einer ersten Betätigungsrichtung B1 verlagerbar. Entsprechend ist der zweite komplementäre Eingriffbereich 57b des zweiten Sperrelements 55b aus der Ruheposition entlang einer zweiten Betätigungsrichtung B2 verlagerbar. Um die Schwenkbarkeit zu erreichen, weisen die Sperrelemente 55a, 55b jeweils einen kreisbogenförmigen Rücksprung 65a, 65b auf, der im wesentlichen den Radius der als Befestigungsmittel 55 verwendeten Schraube hat. Ferner greift ein Spannelement 39, beispielsweise in Form eines Federdrahtes bzw. Draht- oder Blattfeder, in jeweils eine Spannelementaufnahme 67a, 67b der jeweiligen Sperrelements 55a, 55b ein, so daß die komplementären Eingriffbereiche 57a, 57b der Sperrelemente 55a, 55b eine Kraft entgegen der ersten bzw. zweiten Betätigungsrichtung B1 bzw. B2 erfahren. Ohne äußere Krafteinwirkung werden die Sperrelemente 55a, 55b in der Ruheposition gehalten, so daß zumindest bereichsweise ein Formschluß zwischen jeweiligen Eingriffbereichen 43a, 43b und den entsprechenden komplementären Eingriffbereichen 57a, 57b besteht, der verhindert, daß sich das äußere Bandende 9 relativ zu dem inneren Bandende 7 entgegen der Aufweitrichtung W verlagert.

Vorzugsweise umfassen die komplementären Eingriffbereiche 57a, 57b jeweils mehrere Vorsprünge 59a, um in die entsprechenden Eingriffbereiche 43a, 43b einzugreifen. Insbesondere sind die Vorsprünge 59a dazu ausgelegt, bei einer Verlagerung des ersten komplementären Eingriffbereichs 57a entlang der ersten Betätigungsrichtung B1 im wesentlichen gleichzeitig außer Eingriff mit dem ersten Eingriffbereich 43a zu gelangen. Vorzugsweise schließt daher die Verbindungslinie der Spitzen 61 a der korrespondierenden Vorsprünge 59a in der Ruheposition mit der Längserstreckung der Ausnehmung 15, d.h. mit der Aufweitrichtung W, einen Winkel β von etwa 5 Grad bis 20 Grad, besonders bevorzugt von etwa 8 Grad bis etwa 15 Grad, insbesondere von etwa 10 Grad, ein. Durch ein Verschwenken des ersten Sperrelements 55a um einen entsprechenden Winkel gelangen alle Vorsprünge 59a des ersten komplementären Eingriffbereichs 57a im wesentlichen gleichzeitig außer Eingriff mit dem ersten Eingriffbereich 43a. Entsprechend können die korrespondierenden Vorsprünge 59b des zweiten komplementären Eingriffbereichs 57b ausgebildet sein, um durch ein Verschwenken des zweiten Sperrelements 55b um einen entsprechenden Winkel alle Vorsprünge 59b des zweiten komplementären Eingriffbereichs 57b im wesentlichen gleichzeitig außer Eingriff mit dem zweiten Eingriffbereich 43b zu bringen.

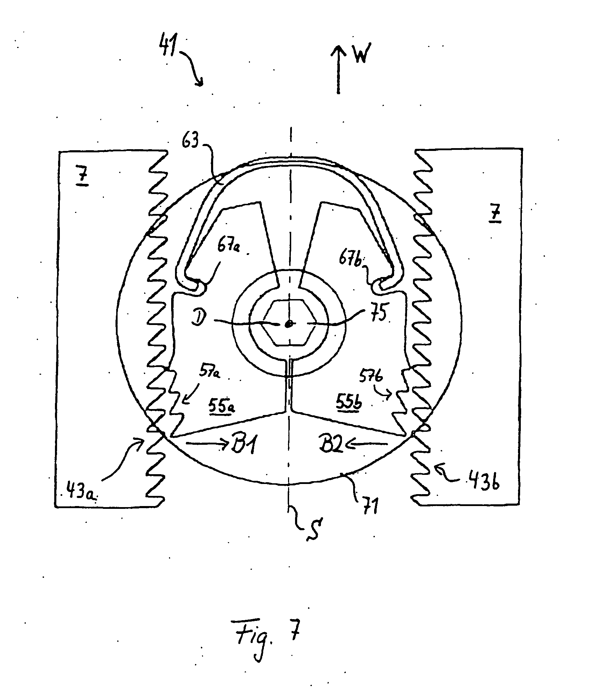

Figur 7 zeigt eine detaillierte Draufsicht der Rasteinrichtung 41 in Betätigungsposition. Aufgrund einer Verlagerung der äußeren Bandendes 9 bzw. der daran befestigten Rasteinrichtung 41 durch ein Aufweiten mittels einer externen Kraft, sind, ausgehend von der Ruheposition, der erste komplementäre Eingriffbereich 57a entlang der ersten Betätigungsrichtung B1 und der zweite komplementäre Eingriffbereich 57b entlang der dazu im wesentlichen antiparallel verlaufenden zweiten Betätigungsrichtung B2 verlagert. Während der Verlagerung werden die Sperrelemente 55a, 55b um die Drehachse D entsprechend verschwenkt und das Spannelement 63 gespannt. Dabei übt das Spannelement 63 aufgrund seiner Rückstellkraft über die Sperrelemente 55a, 55b jeweils eine entsprechende Kraft entgegen der ersten bzw. zweiten Betätigungsrichtung B1 bzw. B2 aus. Alternativ können die Sperrelemente 55a, 55b einstückig ausgebildet sein, wobei die zwei Hälften, d.h. das erste Sperrelement 55a und das zweite Sperrelement 55b, über eine Dünnstelle, welches als Festkörpergelenk ausgelegt ist, verbunden sind. Besonders bevorzugt kann das Festkörpergelenk elastisch bzw. rückstellfähig ausgebildet sein, so daß es als Spannelement 63 fungieren kann. Durch ein weiteres Aufweiten und einer damit verbundenen weiteren relativen Verlagerung des äußeren Bandendes 9 relativ zum inneren Bandende 7, wird die Rasteinrichtung 41 mittels des Spannelementes 63 wieder in die Ruheposition überführt. Ein weitergehendes Aufweiten der Dichtungsinnenmanschette 1 bzw. des Bandes 3 überführt die Rasteinrichtung 41 im folgenden wieder in die Betätigungsposition und so fort, bis die Dichtungsinnenmanschette 1 bzw. das Band 3 den gewünschten oder den maximalen Umfang erreicht hat. Die Rasteinrichtung 41 verharrt schließlich in der Ruheposition, so daß eine Rückverlagerung der Bandenden 7, 9 entgegen der Aufweitrichtung W verhindert wird und die Dichtungsinnenmanschette 1 bzw. das Band 3 den erreichten Umfang beibehält. Dadurch ist die Dichtungsinnenmanschette 1 in dem Kanalrohr, in dem sie eingeführt wurde, hinreichend und dauerhaft fixiert.

Vorzugsweise ist die Dichtungsinnenmanschette 1 rückbaubar. Dazu ist insbesondere die Rasteinrichtung 41 lösbar, so daß das Band 3 aufgrund der eigenen elastischen Federkraft seinen Umfang verringern kann. Insbesondere kann das Befestigungsmittel 75 eine lösbare Schraube sein, so daß mit der Demontage des Befestigungsmittels 75 und damit des Deckelementes 71 auch die Sperrelemente 55a, 55b sowie das Spannelement 63 aus ihrer Position fallen, so daß das äußere Bandende 9 relativ zu dem inneren Bandende 7 frei verlagerbar ist. Vorteilhafterweise sind das Band 3 und die Teile der Rasteinrichtung 41 wiederverwendbar.

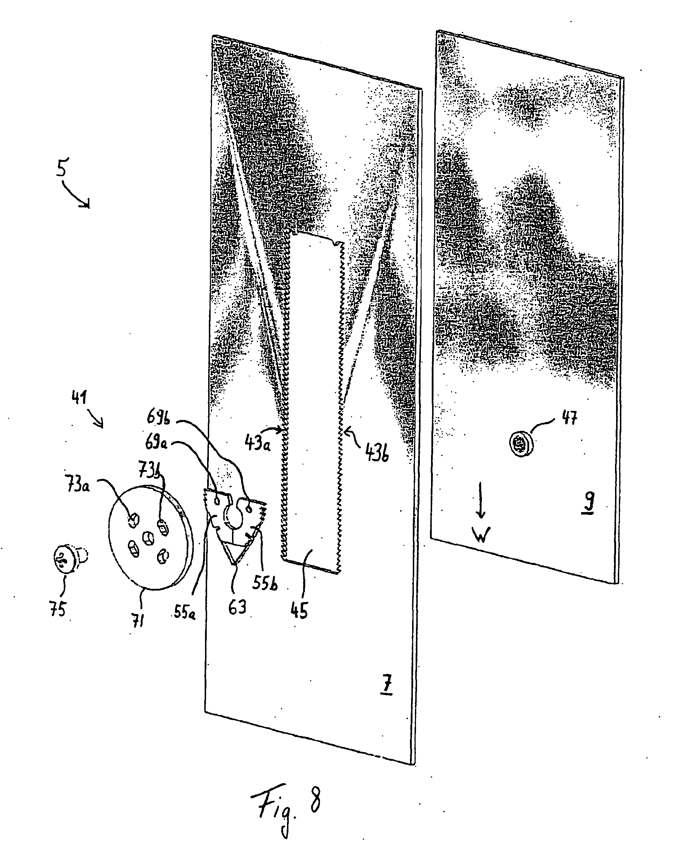

Figur 8 zeigt eine perspektivische Explosionsansicht einer abgewandelten Ausführungsform der Arretierungsvorrichtung 5 der Dichtungsinnenmanschette 1.

In dieser Ausführungsform weist das äußere Bandende 9 eine Rasteinrichtungsbefestigungsbereich 47 in Form einer Einpreßmutter 47 auf, wobei ein zylindrisch geformter Bereich der Einpreßmutter 47 aus den äußeren Bandende 9 hervorsteht, um mit den entsprechenden kreisbogenförmigen Rücksprüngen 65a, 65b der Sperrelemente 55a, 55b in Formschluß zu gelangen. Die Sperrelemente 55a, 55b sind dabei um die Drehachse D der Einpreßmutter 47 schwenkbar gelagert. Ferner weisen die Sperrelemente 55a, 55b jeweils einen Aktuierungsbereich 69a, 69b auf, insbesondere in Form einer Bohrung, durch den die Sperrelemente 55a, 55b mittels eines Werkzeuges aktuiert werden können. Insbesondere können die Sperrelemente 55a, 55b durch die Aktuierung von der Ruheposition in die Betätigungsposition überführt werden, so daß das innere Bandende 7 relativ zu dem äußeren Bandende 9 frei verlagerbar ist.

Damit das Werkzeug in die Aktuierungsbereiche 69a, 69b eingreifen kann, weist das Deckelement 71 entsprechende Werkzeugdurchtritte 73a, 73b auf. Die Werkzeugdurchtritte 73a, 73b sind derart ausgelegt, daß die Aktuierungsbereiche 69a, 69b entsprechend verlagert werden können, so daß die Rasteinrichtung 41 von der Ruheposition in die Betätigungsposition überführt werden kann.

Die vorliegende Beschreibung der bevorzugten Ausführungsformen ist nicht auf die oben beschriebenen jeweiligen Figuren beschränkt. Vielmehr gelten die Ausführungen zu den jeweiligen Figuren sinngemäß auch für die weiteren Figuren. Ebenso gelten die zu den Figuren gemachten Ausführungen auch für die vorangegangenen Aspekte und Ausführungsformen. Somit können mittels der zu den (jeweiligen) Figuren beschrieben Einzelmerkmale und/oder mittels der Einzelmerkmale der Aspekte und/der (Einzelmerkmale) Ausführungsformen weitere bevorzugte Ausführungsformen gebildet werden, wobei die Einzelmerkmale beliebig miteinander kombiniert werden können.

### Bezugszeichenliste

- 1: Dichtungsinnenmanschette
- 3: Band
- 5: Arretierungsvorrichtung
- 7: innerer Bandteil
- 9: äußerer Bandteil
- 11: inneres Bandende
- 13: äußeres Bandende
- 15: Knickbereich
- 17: Ausnehmung
- 19: Rastvorrichtung
- 21: erste Längsseite
- 23: zweite Längsseite
- 25: erster Eingriffbereich
- 27: zweiter Eingriffbereich
- 29: Vorsprung
- 31: Deckelement
- 33: erstes Sperritzel
- 35: zweites Sperritzel
- 37: Rastritzel
- 39: Federelement
- 41: Rasteinrichtung
- 43a, 43b: erster und zweiter Eingriffbereich
- 45: Ausnehmung
- 47: Rasteinrichtungsbefestigungsbereich
- 51: Gleitbereich
- 53: Rastbereich
- 55a, 55b: erstes und zweites Sperrelement
- 57a, 57b: erster und zweiter komplementärer Eingriffbereich
- 59a, 59b: korrespondierender Vorsprung
- 61a, 61b: Spitzen der korrespondierenden Vorsprünge 59a, 59b
- 63: Spannelement
- 65a, 65b: kreisbogenförmiger Rücksprung
- 67a, 67b: Spannelementaufnahme
- 69a, 69b: Aktuierungsbereich
- 71: Deckelement
- 73a, 73b: Werkzeugdurchtritte
- 75: Befestigungsmittel
- B1, B2: erste und zweite Betätigungsrichtung
- D: Drehachse
- R: Radiusvektor
- R₁: maximaler Biegeradius des äußeren Bandteils 9
- R₂: maximaler Biegeradius des inneren Bandteils 7
- R₃: maximaler Biegeradius des Knickbereichs 15
- R_{b}: Biegeradius
- Rₖ: Krümmungsradius
- S: Symmetrieachse
- U: Umfangsrichtung
- W: Aufweitrichtung
- Z: Zylinder-Achse, z-Achse

## Patentansprüche

1. Dichtungsinnenmanschette (1) zum Einsetzen in Rohre aufweisend:
- ein Band (3), welches um eine Biegeachse (Z) entlang eines Umfangs (U) mit einem Biegeradius (R_{b}) derart gebogen ist, daß ein innerer Bandteil (7) und ein äußerer Bandteil (9) einander überlappen,
wobei das Band (3) aufweitbar ist, so daß der innere Bandteil (7) relativ zu dem äußeren Bandteil (9) entlang einer Aufweitrichtung (W) verlagerbar ist,
- zumindest eine Arretierungsvorrichtung (5), welche verhindert, daß der innere Bandteil (7) relativ zu dem äußeren Bandteil (9) entgegen der Aufweitrichtung (W) verlagerbar ist,
wobei zwischen dem inneren Bandteil (7) und dem äußeren Bandteil (9) parallel zur Biegeachse (Z) ein Knickbereich (15) in dem Band (3) ausgebildet ist,
wobei das Band (3) entlang dem Umfang in dem äußeren Bandteil (9) einen maximalen Biegeradius (R₁) aufweist, der kleiner ist als der maximale Biegeradius (R₂) entlang dem Umfang in dem inneren Bandteil (7),
**dadurch gekennzeichnet, daß**
sich der Biegeradius (R_{b}) entlang des Umfangs in dem inneren Bandteil (7) stetig vergrößert.

2. Dichtungsinnenmanschette (1) nach Anspruch 1, wobei der Biegeradius (R₁) entlang des Umfangs in dem äußeren Bandteil (9) konstant ist.

3. Dichtungsinnenmanschette (1) nach Anspruch 1 oder 2, wobei der Biegeradius (R₂) entlang des Umfangs in dem inneren Bandteil (7) konstant ist.

4. Dichtungsinnenmanschette (1) nach einem der Ansprüche 1 bis 3, wobei sich der Biegeradius (R₂) entlang des Umfangs in dem inneren Bandteil (7) linear gemäß der Gleichung R_{b} =(U₀+ΔU)/2π vergrößert, wobei U₀ der Umfang der Dichtungsinnenmanschette im Auslieferungszustand ist und ΔU der Zunahme des Umfangs (U) durch das Aufweiten entspricht.

5. Dichtungsinnenmanschette (1) nach einem der vorherigen Ansprüche, wobei das Band (3) im Knickbereich (15) einen Biegeradius (R₃) aufweist, der kleiner als der Biegeradius (R₁) des Bandes (3) in dem äußeren Bandteil (9) ist.

6. Dichtungsinnenmanschette (1) nach einem der vorherigen Ansprüche, wobei die zumindest eine Arretierungsvorrichtung (5) eine Ausnehmung (17) aufweist, welche zumindest bereichsweise in dem inneren Bandteil (7) ausgebildet ist, wobei sich die Längsseiten der Ausnehmung (17) entlang des Umfangs (U) erstrecken.

7. Dichtungsinnenmanschette (1) nach Anspruch 6, wobei die Ausnehmung (17) an den zwei gegenüberliegenden Längsseiten einen ersten Eingriffbereich (25) und einen zweiten Eingriffbereich (27) aufweist.

8. Dichtungsinnenmanschette (1) nach Anspruch 6 oder 7, wobei die zumindest eine Arretierungsvorrichtung (5) eine Rastvorrichtung (19) aufweist, die an dem äußeren Bandende (9) befestigt ist.

9. Dichtungsinnenmanschette (1) nach Anspruch 8, wobei die Rastvorrichtung (19) ein erstes drehbar gelagertes Sperritzel (33), ein zweites drehbar gelagertes Sperritzel (35) und zumindest ein Rastelement (37) aufweist.

10. Dichtungsinnenmanschette (1) nach einem der Ansprüche 1 bis 5, wobei die zumindest eine Arretierungsvorrichtung (5) weiter umfaßt:
- eine Ausnehmung (45), die zumindest bereichsweise in dem inneren Bandende (7) ausgebildet ist und deren Längsseiten sich entlang des Umfangs erstrecken,
- eine Rasteinrichtung (41) und
- einen in dem äußeren Bandende (9) angeordneten Rasteinrichtungsbefestigungsbereich (47) zur Befestigung der Rasteinrichtung (41),
wobei die Ausnehmung (45) an den zwei gegenüberliegenden Längsseiten einen ersten Eingriffbereich (43a) und einen zweiten Eingriffbereich (43b) aufweist,
wobei die Rasteinrichtung (41) ein erstes Sperrelement (55a), ein zweites Sperrelement (55b) und zumindest ein Spannelement (63) aufweist,
wobei das erste Sperrelement (55a) einen ersten komplementären Eingriffbereich (57a) aufweist, welcher ausgelegt ist, um in einer Ruheposition zumindest bereichsweise in den ersten Eingriffbereich (43a) einzugreifen, und das zweite Sperrelement (55b) einen zweiten komplementären Eingriffbereich (57b) aufweist, welcher ausgelegt ist, um in der Ruheposition zumindest bereichsweise in den zweiten Eingriffbereich (43b) einzugreifen,
wobei der erste komplementäre Eingriffbereich (57a) des ersten Sperrelements (55a) aus der Ruheposition entlang einer ersten Betätigungsrichtung (B1) verlagerbar ist und der zweite komplementäre Eingriffbereich (57b) des zweiten Sperrelements (55b) aus der Ruheposition entlang einer zweiten Betätigungsrichtung (82) verlagerbar ist und
wobei das zumindest eine Spannelement (63) ausgelegt ist
an den ersten komplementären Eingriffbereich (57a) eine Kraft entgegen der ersten Betätigungsrichtung (B1) und an den zweiten komplementären Eingriff-bereich (57b) eine Kraft entgegen der zweiten Betätigungsrichtung (B2) anzulegen, um den ersten und zweiten komplementären Eingriffbereich (57a, 57b) in der Ruheposition zu halten,
so daß die Rasteinrichtung (41) nicht relativ zur Ausnehmung (45) entgegen der Aufweitrichtung (W) verlagerbar ist.

11. Dichtungsinnenmanschette (1) nach Anspruch 10, wobei die erste Betätigungsrichtung (B1) im wesentlichen antiparallel zur zweiten Betätigungsrichtung (B2) ist.

12. Dichtungsinnenmanschette (1) nach einem der Ansprüche 10 oder 11, wobei die Rasteinrichtung (41) zumindest ein Deckelement (71) und ein Befestigungsmittel (75) zur lösbaren Befestigung der Rasteinrichtung (41) an dem Rasteinrichtungsbefestigungsbereich (47) aufweist.

13. Dichtungsinnenmanschette (1) nach einem der Ansprüche 10 bis 12, wobei das erste Sperrelement (55a) und das zweite Sperrelement (55b) plattenförmig ausgebildet sind.

14. Dichtungsinnenmanschette (1) nach einem der vorherigen Ansprüche, wobei das Band (3) auf der Außenseite mit einem Elastomer überzogen ist.

15. Verwendung einer Dichtungsinnenmanschette (1) nach einem der Ansprüche 1 bis 14 zur Abdichtung von Rohren, wobei die Dichtungsinnenmanschette in einem Auslieferungszustand in das Rohrinnere eingeführt wird und an einer Montageposition durch Aufweiten in eine Betriebsposition überführt wird.

## Claims

1. Sealing inner sleeve (1) for insertion into pipes, comprising:
- a strip (3) bent around a bending axis (Z) along a circumference (U) having a bending radius (R_{b}) such that an inner strip part (7) and an outer strip part (9) overlap one another,
wherein the strip (3) is expansible such that the inner strip part (7) is displaceable in respect to the outer strip part (9) along an expansion direction (W),
- at least one arresting device (5) preventing that the inner strip part (7) is displaceable opposite to the expansion direction (W) in respect to outer strip part (9),
wherein a dogleg area (15) is formed in the strip (3) between the inner strip part (7) and the outer strip part (9) in parallel to the bending axis (Z),
wherein the strip (3) comprises a maximum bending radius (R₁) along the circumference in the outer strip part (9), that is smaller than the maximum bending radius (R₂) along the circumference of the inner strip part (7),
**characterized in that**
the bending radius (R_{b}) is continuously increasing along the circumference of the inner strip part (7).

2. The sealing inner sleeve (1) according to claim 1, wherein the bending radius (R₁) along the circumference is constant in the outer strip part (9).

3. The sealing inner sleeve (1) according to claim 1 or 2, wherein the bending radius (R₂) along the circumference is constant in the inner strip part (7).

4. The sealing inner sleeve (1) according to any of claims 1 to 3, wherein the bending radius (R₂) along the circumference in the inner strip part (7) is increasing linearly according to equation R_{b} = (U₀ + ΔU)/2π, wherein U₀ is the circumference of the sealing inner sleeve (U) in the delivery state and ΔU corresponds to the circumference (U) increase due to the expansion.

5. The sealing inner sleeve (1) according to any of the preceding claims, wherein the strip (3) comprises a bending radius (R₃) in the dogleg area (15), which is smaller than the bending radius (R₁) of the strip (3) in the outer strip part (9).

6. The sealing inner sleeve (1) according to any of the preceding claims, wherein the at least on arresting device (5) comprises a recess (17), formed at least in some areas in the inner strip part (7), wherein the longitudinal sides of the recess (17) extend along the circumference (U).

7. The sealing inner sleeve (1) according to claim 6, wherein the recess (17) comprises a first engaging area (25) and a second engaging area (27) at the two opposing longitudinal sides.

8. The sealing inner sleeve (1) according to claim 6 or 7, wherein the at least one arresting device (5) comprises a locking device (19) secured to an outer end (9) of the strip.

9. The sealing inner sleeve (1) according to claim 8, wherein the locking device (19) comprises a first rotatably supported blocking pinion (33), a second rotatably supported blocking pinion (35) and at least one locking element (37).

10. The sealing inner sleeve (1) according to any of claims 1 to 5, the at least one arresting device (5) further comprising:
- a recess (45) formed at least in some areas in the inner end (7) of the strip the longitudinal sides of which extend along the circumference,
- an arresting means (41) and
- an arresting means fixing area (47) arranged in the outer end (9) of the strip for fixing the locking means (41),
wherein the recess (45) comprises a first engaging area (43a) and a second engaging area (43b) at the two opposing longitudinal sides,
wherein the locking means (41) comprises a first blocking element (55a), a second blocking element (55b) and at least one tension element (63),
wherein the first blocking element (55a) comprises a first complementary engaging area (57a) designed to engage at least in some areas in the first engaging area (43a) in a rest position, and the second blocking element (55b) comprises a second complementary engaging area (57b) designed to engage at least in some areas in the second engaging area (43b) in a rest position,
wherein the first complementary engaging area (57a) of the first blocking element (55a) is displaceable along a first actuation direction (B1) from the rest position and the second complementary engaging area (57b) of the second blocking element (55b) is displaceable along a second actuation direction (B2) from the rest position, and
wherein the at least one tension element (63) is designed
to apply a force opposite to the first actuation direction (B1) to the first complementary engaging area (57a) and to apply a force opposite to the second actuation direction (B2) to the second complementary engaging area (57b) to maintain the first and second complementary engaging areas (57a, 57b) in the rest position,
such that the locking means (41) is not displaceable opposite to the expansion direction (W) in respect to the recess (45).

11. The sealing inner sleeve (1) according to claim 10, wherein the first actuation direction (B1) is essentially in parallel to the second actuation direction (B2).

12. The sealing inner sleeve (1) according to any of claims 10 or 11, wherein the locking means (41) comprises at least a covering element (71) and a fixing means (75) for detachably fixing the locking means (41) to the arresting means fixing area (47).

13. The sealing inner sleeve (1) according to any of claims 10 to 12, wherein the first blocking element (55a) and the second blocking element (55b) are formed in a disc shape.

14. The sealing inner sleeve (1) according to any of the preceding claims, wherein the strip (3) is covered by an elastomer on the outer side.

15. Use of a sealing inner sleeve (1) according to any of claims 1 to 14 for sealing of pipes, wherein the sealing inner sleeve is inserted into the pipe inner in its delivery state and is transferred to an operating position by expanding at a fitting position.

## Revendications

1. Manchon d'étanchéité intérieur (1) pour l'insertion dans des tuyaux, présentant :
- une bande (3) qui est courbée autour d'un axe de courbure (Z) le long d'une périphérie (U) avec un rayon de courbure (R_{b}) de telle sorte qu'une partie de bande intérieure (7) et une partie de bande extérieure (9) se chevauchent mutuellement,
dans lequel la bande (3) peut être élargie de sorte que la partie de bande intérieure (7) peut être déplacée par rapport à la partie de bande extérieure (9) le long d'une direction d'élargissement (W),
- au moins un dispositif de blocage (5) qui empêche que la partie de bande intérieure (7) puisse être déplacée par rapport à la partie de bande extérieure (9) à l'encontre de la direction d'élargissement (W),
dans lequel une région de coude (15) est réalisée dans la bande (3) entre la partie de bande intérieure (7) et la partie de bande extérieure (9) parallèlement à l'axe de courbure (Z),
dans lequel la bande (3) présente un rayon de courbure maximal (R₁) le long de la périphérie dans la partie de bande extérieure (9) qui est inférieur au rayon de courbure maximal (R₂) le long de la périphérie dans la partie de bande intérieure (7),
**caractérisé en ce que**
le rayon de courbure (R_{b}) augmente en continu le long de la périphérie dans la partie de bande intérieure (7).

2. Manchon d'étanchéité intérieur (1) selon la revendication 1, dans lequel le rayon de courbure (R₁) est constant le long de la périphérie dans la partie de bande extérieure (9).

3. Manchon d'étanchéité intérieur (1) selon la revendication 1 ou 2, dans lequel le rayon de courbure (R₂) est constant le long de la périphérie dans la partie de bande intérieure (7).

4. Manchon d'étanchéité intérieur (1) selon l'une quelconque des revendications 1 à 3, dans lequel le rayon de courbure (R₂) augmente linéairement selon l'équation R_{b} = (U₀+ΔU)/2π le long de la périphérie dans la partie de bande intérieure (7), dans lequel U₀ est la périphérie du manchon d'étanchéité intérieur tel que livré et ΔU correspond à l'augmentation de la périphérie (U) par l'élargissement.

5. Manchon d'étanchéité intérieur (1) selon l'une quelconque des revendications précédentes, dans lequel la bande (3) présente un rayon de courbure (R₃) dans la région de coude (15) qui est inférieur au rayon de courbure (R₁) de la bande (3) dans la partie de bande extérieure (9).

6. Manchon d'étanchéité intérieur (1) selon l'une quelconque des revendications précédentes, dans lequel l'au moins un dispositif de blocage (5) présente un évidement (17) qui est réalisé au moins par région dans la partie de bande intérieure (7), dans lequel les côtés longitudinaux de l'évidement (17) s'étendent le long de la périphérie (U).

7. Manchon d'étanchéité intérieur (1) selon la revendication 6, dans lequel l'évidement (17) présente une première région d'engagement (25) et une seconde région d'engagement (27) sur les deux côtés longitudinaux opposés.

8. Manchon d'étanchéité intérieur (1) selon la revendication 6 ou 7, dans lequel l'au moins un dispositif de blocage (5) présente un dispositif d'encliquetage (19) qui est fixé à l'extrémité de bande extérieure (9).

9. Manchon d'étanchéité intérieur (1) selon la revendication 8, dans lequel le dispositif d'encliquetage (19) présente un premier pignon de blocage logé à rotation (33), un second pignon de blocage logé à rotation (35) et au moins un élément d'encliquetage (37).

10. Manchon d'étanchéité intérieur (1) selon l'une quelconque des revendications 1 à 5, dans lequel l'au moins un dispositif de blocage (5) comprend en outre :
- un évidement (45) qui est réalisé au moins par région dans l'extrémité de bande intérieure (7) et dont les côtés longitudinaux s'étendent le long de la périphérie,
- un dispositif d'encliquetage (41) et
- une région de fixation de dispositif d'encliquetage (47) disposée dans l'extrémité de bande extérieure (9) pour la fixation du dispositif d'encliquetage (41),
dans lequel l'évidement (45) présente une première région d'engagement (43a) et une seconde région d'engagement (43b) sur les deux côtés longitudinaux opposés,
dans lequel le dispositif d'encliquetage (41) présente un premier élément de blocage (55a), un second élément de blocage (55b) et au moins un élément de serrage (63),
dans lequel le premier élément de blocage (55a) présente une première région d'engagement complémentaire (57a) qui est conçue pour s'engager au moins par région dans la première région d'engagement (43a) dans une position de repos, et le second élément de blocage (55b) présente une seconde région d'engagement complémentaire (57b) qui est conçue pour s'engager au moins par région dans la seconde région d'engagement (43b) dans la position de repos, dans lequel la première région d'engagement complémentaire (57a) du premier élément de blocage (55a) peut être déplacée de la position de repos le long d'un premier sens d'actionnement (B1) et la seconde région d'engagement complémentaire (57b) du second élément de blocage (55b) peut être déplacée de la position de repos le long d'un second sens d'actionnement (B2) et
dans lequel l'au moins un élément de serrage (63) est conçu pour appliquer une force à l'encontre du premier sens d'actionnement (B1) sur la première région d'engagement complémentaire (57a) et une force à l'encontre du second sens d'actionnement (B2) sur la seconde région d'engagement complémentaire (57b) afin de maintenir les première et seconde régions d'engagement complémentaires (57a, 57b) dans la position de repos,
de sorte que le dispositif d'encliquetage (41) ne peut pas être déplacé par rapport à l'évidement (45) à l'encontre de la direction d'élargissement (W).

11. Manchon d'étanchéité intérieur (1) selon la revendication 10, dans lequel le premier sens d'actionnement (B1) est essentiellement antiparallèle au second sens d'actionnement (B2).

12. Manchon d'étanchéité intérieur (1) selon l'une quelconque des revendications 10 ou 11, dans lequel le dispositif d'encliquetage (41) présente au moins un élément de recouvrement (71) et un moyen de fixation (75) pour la fixation amovible du dispositif d'encliquetage (41) au niveau de la région de fixation de dispositif d'encliquetage (47).

13. Manchon d'étanchéité intérieur (1) selon l'une quelconque des revendications 10 à 12, dans lequel le premier élément de blocage (55a) et le second élément de blocage (55b) sont réalisés en forme de plaque.

14. Manchon d'étanchéité intérieur (1) selon l'une quelconque des revendications précédentes, dans lequel la bande (3) est recouverte d'un élastomère sur le côté extérieur.

15. Utilisation d'un manchon d'étanchéité intérieur (1) selon l'une quelconque des revendications 1 à 14 pour l'étanchéification de tuyaux, dans laquelle le manchon d'étanchéité intérieur est introduit dans l'intérieur de tuyau tel que livré et transféré par élargissement dans une position de service sur un poste de montage.
